# EUROPÄISCHE PATENTSCHRIFT

(11) **EP 2 132 841 B1**
(45) Veröffentlichungstag und Bekanntmachung des Hinweises auf die Patenterteilung: **29.10.2014**
(21) Anmeldenummer: 08717856.2
(22) Anmeldetag: 14.03.2008
(51) Int. Cl.: H02B 1/052

(54) **SCHNAPPBEFESTIGUNG ZUR BEFESTIGUNG EINES GEHÄUSES**
SNAP FASTENER FOR FASTENING A HOUSING
FIXATION PAR ENCLIQUETAGE POUR FIXER UN BOITIER

(30) Priorität: 30.03.2007 DE 102007015470
(43) Veröffentlichungstag der Anmeldung: 16.12.2009
(73) Patentinhaber: Siemens Aktiengesellschaft, 80333 München (DE)
(72) Erfinder: NEUMEIER, Michael, 93055 Regensburg (DE); WEBER, Christoph, 84061 Ergoldsbach (DE)
(86) Internationale Anmeldenummer: PCT/EP2008/053115
(87) Internationale Veröffentlichungsnummer: WO 2008/119651

(56) Entgegenhaltungen:
- EP-A- 1 460 720
- DE-A1- 19 709 811
- DE-B3- 10 243 383

## Beschreibung

Die Erfindung betrifft eine Schnappbefestigung zur Befestigung eines Gehäuses an einer Schiene mit einem Schieber, wobei der Schieber ein Betätigungselement, ein Verriegelungselement und einen Verbindungsbereich zwischen dem Betätigungselement und dem Verriegelungselement zur Umlenkung der Richtung der Betätigungskraft, die über den Verbindungsbereich auf das Verriegelungselement wirkt, aufweist. Des Weiteren betrifft die Erfindung ein Modul mit einer derartigen Schnappbefestigung.

Eine derartige Schnappbefestigung kommt in Verbindung mit Reiheneinbaugeräten, insbesondere mit Schaltern aus Sammelschienenverbünden, zum Einsatz. Das Reiheneinbaugerät weist hierbei ein Gehäuse auf, welches eine für den Sammelschienenverbund vorteilhafte Form aufweist. Einerseits werden aus Platzgründen eine Ansammlung der Reiheneinbaugeräte dadurch unterstützt, dass das Gehäuse des Reiheneinbaugerätes, welches beispielsweise als Schalter oder Schutzschalter ausgeführt ist, eine flächige Anordnung weiterer Gehäuse auf zwei oder mehr Seiten zulässt und gleichzeitig eine Schnappbefestigung aufweist, die zur Befestigung des Gehäuses an einer Schiene, insbesondere einer Hutschiene, vorgesehen ist.

Ein solcher Schalter oder Schutzschalter wird mit Hilfe eines Schiebers auf der Hutschiene fixiert. Problematisch ist hierbei, dass die Hutschiene bei der Benutzung des Schalters auf der dem Benutzer abgewandten Seite angeordnet ist und ein Lösen aus dem Sammelschienenverbund aufgrund mangelnder Zugänglichkeit wegen räumlich naheliegender Schalter nicht ohne weiteres zu bewerkstelligen ist.

Folglich weisen herkömmliche Schieber ein Betätigungselement auf, welches vom Benutzer auch im montierten Zustand stets zugänglich ist und weisen weiter ein Verriegelungselement auf, welches an der Rückseite des Gehäuses in der Nähe der Schiene angeordnet ist. Beide Elemente werden über einen Verbindungsbereich verbunden. Der Verbindungsbereich hat die Aufgabe, die Betätigungskraft, die vom Benutzer auf das Betätigungselement ausgeübt wird in die Bewegungslinie des Verriegelungselementes umzulenken.

Gleichzeitig sollen komfortable Methoden der Montage bzw. Demontage des Schalters gewährleistet sein. So muss beim Aufschnappen des Schalters auf die Schiene das Verriegelungselement durch das Einwirken der Schiene kurzzeitig entgegen der Verriegelungsrichtung bewegbar sein. Für die Demontage ist das Betätigungselement vom Schalter in Richtung Benutzer bewegbar, wobei eine Entriegelung durch eine entsprechende Bewegung des Verriegelungselementes gewährleistet ist.

Aufgrund der aufwendigen Form des Schiebers wurden in der Vergangenheit aufwendige mehrteilige Schieber verwendet.

Aus DE 297 10 310 U1 ist ein mehrteiliger Schieber bekannt, der in einen verriegelnden und einen separaten, betätigenden Teil aufgeteilt ist.

Weiterhin ist aus der DE 102 43 383 B3 eine Befestigungseinrichtung zur Befestigung eines Installationsgeräts auf einer Tragschiene bekannt. Diese weist an einer Befestigungsunterseite des Installationsgeräts einen Schieber auf, welcher senkrecht zur Tragschiene verschiebbar ist und in einer Befestigungsstellung mittels Federkraft in Richtung der Tragschiene gedrückt wird, wobei eine Rastnase des Schiebers die Tragschiene untergreift. Ferner weist die Befestigungseinrichtung einen Haltearm auf, welcher relativ zu einem Gehäuse des Installationsgeräts zumindest geringfügig beweglich ist und zur Fixierung des Schiebers am Gehäuse vorgesehen ist.

Ebenso ist aus der EP 1 460 720 A ein auf eine Tragschiene aufschnappbares Gerät bekannt, welches einen federbelasteten Schieber mit einem Rasthaken aufweist, der die Tragschiene zum Fixieren des Geräts untergreift. Über ein Filmscharnier ist der Schieber mit einem Schlepphebel verbunden, an den über ein weiteres Filmscharnier an ein Betätigungselement angeformt ist.

Ferner ist in der DE 197 09 811 A1 eine Vorrichtung zum Befestigen eines Geräts auf einer Tragschiene offenbart, welches zwei Halteschieber aufweist, welche in einer Haltestellung die Ränder der Tragschiene hintergreifen. Ein Bedienteil ist mit den Halteschiebern über einen Kraftumlenkmechanismus verbunden, welcher mehrere Filmangussscharniere aufweist. Mit Hilfe von Rückstellfedern wird eine Rückstellkraft erzeugt, welche die Halteschieber in die Haltestellung zurückdrängt.

Der Erfindung liegt die Aufgabe zugrunde, eine Schnappbefestigung für Module, insbesondere Reiheneinbaugeräte und ähnliche Geräte, anzugeben, die auch bei angeschlossenen Leitern bzw. Sammelschienen auch aus einem angereihten Verband heraus bequem lösbar und gleichzeitig kostengünstig herstellbar sind.

Diese Aufgabe wird bei einer Schnappbefestigung der eingangs genannten Art dadurch gelöst, dass der Schieber einstückig und zumindest dessen Verbindungsbereich elastisch zurückstellend ausgeführt ist. Des Weiteren wird die Aufgabe durch ein Modul mit einer derartigen Schnappbefestigung gelöst.

Erfindungsgemäß ist der Schieber der Schnappbefestigung einstückig ausgeführt, so dass ein Betätigungselement und ein Verriegelungselement nicht nur formschlüssig miteinander verbunden sind, sondern auch stoffschlüssig, d.h., der Schieber ist nicht in seine Bestandteile zu zerlegen, ohne diesen zu beschädigen. Die Verbindung der beiden Elemente wird hierbei durch den Verbindungsbereich realisiert, der elastisch zurückstellend ausgeführt ist. Ggf. können auch das Betätigungs- und das Verriegelungselement eine elastisch zurückstellende Funktion aufweisen. In der Verriegelungsstellung der Schnappbefestigung befindet sich der Schieber in einer Form, die der Form entspricht, die er auch als loses Teil einnehmen würde. Die elastisch zurückstellende Kraftwirkung in die ursprüngliche Form ergibt sich in Wechselwirkung des Schiebers mit dessen Führung, die beispielsweise aus Gehäuseteilen oder Bestandteilen der Schnappbefestigung besteht. Aufgrund des beliebig geformten, beispielsweise elliptisch, kreisrund oder ähnlich geformten Verbindungsbereiches, bzw. der entsprechenden Form der Führung des Schiebers, bewirkt eine Verschiebung des Schiebers durch eine Betätigung des Betätigungselementes oder eine durch die Schiene verursachte Betätigung des Verriegelungselementes eine zwangsweise Verformung des Schiebers, der wegen seiner Formgedächtniseigenschaft in die Position der Verriegelungsstellung zurückgedrückt wird. Mit anderen Worten, eine Deformation des Verbindungsbereiches führt stets zu einer Entwicklung einer elastischen Federkraft, die den Schieber in die Verriegelungsstellung zurückzwingt.

Bei einer vorteilhaften Ausführungsform besteht der Schieber aus einem nichtmetallischen Material, insbesondere Kunststoff. Ausschlaggebend ist die Eigenschaft des Formgedächtnisses, die beispielsweise durch spezielle Kunststoffe auch auf eine kosteneffiziente Art umgesetzt werden können. Somit verbindet der Schieber mit der Kraftumleitungsfunktion gleichzeitig eine rückstellende Funktion aufgrund der eigenen Elastizität bzw. des Formgedächtnisses.

Vorteilhafterweise weist die Schnappbefestigung eine Führung des Schiebers auf, die an die Form des Schiebers angepasst ist. In der Verriegelungsstellung entspricht die Form, die dem Schieber durch die Führung vorgegeben wird, genau der Form, in der der Schieber am wenigsten (mit Vorspannung) oder keine (ohne Vorspannung) elastischen Kräfte entwickelt. Wichtig in diesem Zusammenhang ist, dass durch eine hohe Krümmung der Führung eine hohe elastische Kraft aufgebaut werden kann, die aber gleichzeitig eine entsprechend hohe Materialstabilität des Schiebers voraussetzt. Es findet eine Abwägung zwischen der Materialstabilität und der erforderlichen Krümmung statt. Dadurch können ggf. hohe rückstellende Kräfte erzielt werden, die gleichzeitig eine hohe Materialstabilität des Schiebers erfordern.

Vorteilhafterweise ist die Führung des Schiebers zumindest teilweise in das Gehäuse integriert. Das Gehäuse eines Moduls, Reiheneinbaugeräts oder Schalters, ist in der Regel unabdingbar, womit bei einer zusätzlichen Übernahme von Führungseigenschaften Bauteile bzw. Material eingespart werden kann. Zudem erleichtert die Führung der Schnappbefestigung eine Anlagerung in der Nähe der Begrenzungsflächen des jeweiligen Geräts. Somit entspannt sich ggf. der Krümmungszwang des Schiebers.

Vorteilhafterweise weist der Schieber, insbesondere in dessen Verbindungsbereich, eine oder mehrere Öffnungen zur Durchführung kontaktierender Elemente, wie z.B. Leiter bzw. Kabel, auf. Hiermit wird eine Anordnung des Schiebers in einer Gehäusekontur vorteilhaft unterstützt, wobei gleichzeitig der Verbindungsbereich entsprechend den Anforderungen veränderbar ist. So können beispielsweise mehrere Öffnungen vorgesehen werden, oder eine bestimmte Form der Öffnung realisiert werden, da es weniger auf die Form des Verbindungsbereichs ankommt, sondern vielmehr auf dessen Funktion der Kraftübertragung und dessen Elastizität.

Vorteilhafterweise kann bei einer vorteilhaften Ausführungsform die Schnappbefestigung beispielsweise in ein Modul, ein Reiheneinbaugerät oder einen Schalter integriert sein und hierbei für Schienen, wie beispielsweise eine Sammel- oder Hutschiene, konzipiert sein.

Vorteilhafterweise kann der Schieber oder die Führung der Schnappbefestigung weitere Federelemente aufweisen, die in der herkömmlichen Art und Weise die Federkraft des Schiebers unterstützen.

Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der in den Figuren dargestellten Ausführungsbeispiele näher beschrieben und erläutert.

Es zeigen:
- FIG 1: ein Reiheneinbaugerät auf einer Hutschiene,
- FIG 2: das Reiheneinbaugerät aus FIG 1 in teilweise geschnittener Ansicht,
- FIG 3: das Reiheneinbaugerät aus FIG 1 in teilweise geschnittener Ansicht im entriegelten Zustand,
- FIG 4: das Reiheneinbaugerät aus FIG 1 bei De-/Montage,
- FIG 5: einen Schieber für ein Reiheneinbaugerät und
- FIG 6: einen Schieber für ein Reiheneinbaugerät mit zusätzlichem Federelement.

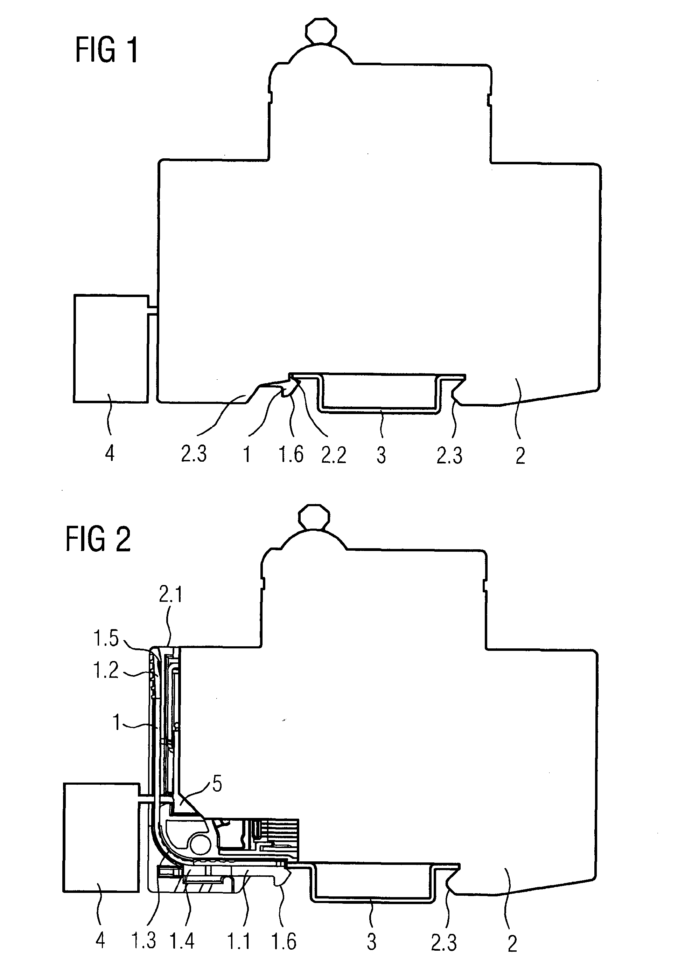

FIG 1 zeigt ein Reiheneinbaugerät 2 auf einer Hutschiene 3 im montierten Zustand. Die Schnappbefestigung des Reiheneinbaugerätes 2 ist verriegelt, wobei die Anformung 2.3 des Gehäuses in Kombination mit einer Ausformung 1.6 des Schiebers 1 zusammen mit dem Gehäuse des Reiheneinbaugerätes 2 die Hutschiene 3 derartig umfassen, so dass es zu einem festen Halt des Reiheneinbaugerätes 2 führt.

Neben dem Reiheneinbaugerät 2 ist eine Sammelschiene 4 angeordnet, die aufgrund der nahegelegenen Anordnung eine elektrische Kontaktierung mit einer Klemme 5 bzw. weiteren Klemmen unterstützt.

Die Ausformung 2.3 des Gehäuses unterstützt die Entriegelungsbewegung des Schiebers 1 zusammen mit der Ausformung 1.6 des Schiebers 1. Weiter wird durch den Gehäuseabsatz 2.2 eine lokale Klemmung eines Extremums der Hutschiene 3 in Kombination mit der Ausformung 1.6 im verriegelten Zustand erzielt. Dies dient weiter der festen Halterung des Reiheneinbaugerätes 2.

FIG 2 zeigt das Reiheneinbaugerät 2 aus FIG 1 in teilweise geschnittener Ansicht im verriegelten Zustand. Der geschnittene Teil der FIG 2 beschränkt sich hierbei auf den Bereich des Reiheneinbaugerätes 2, in dem die Führung des Schiebers 1 und der Schieber 1 selbst angeordnet ist.

Am Betätigungselement 1.2 des Schiebers 1 ist eine Raststelle 1.5 vorgesehen, die in Verbindung mit der Gehäusekontur 2.1 eine Verrastung des Schiebers 1 in der entriegelten Position gewährleistet. Auf diese Weise ist trotz des Aufbaus einer elastischen Kraft aufgrund der Formveränderung durch die Führung des Schiebers 1 eine Verankerung erzielbar, womit die Montage bzw. Demontage einfacher gestaltet werden kann.

Weiter ist die Klemme 5 abgebildet, mit welcher das Reiheneinbaugerät 2, welches beispielsweise als Schalter ausgeführt ist, eine elektrische Verbindung mit der Sammelschiene 4 aufweisen kann, wobei die elektrische Verbindung ggf. durch eine Öffnung oder mehrere Öffnungen des Schiebers 1 in dessen Verbindungsbereich 1.3 oder in einen Bereich, der in der Nähe des Verbindungsbereichs 1.3 liegt, hindurch ragt. Es ist ebenfalls denkbar, die hierfür notwendige Öffnung als Aussparung innerhalb des Schiebers 1 umzusetzen, die nicht vollständig vom Schieber 1 eingefasst wird.

Zusätzlich ist in der Nähe des Verriegelungselementes 1.1 ein Federelement 1.4 anordenbar, welches ggf. einstückig mit dem Schieber verbunden ist. Das Federelement 1.4 dient hierbei zur Unterstützung des Kraftaufbaus bei der Entriegelung. Die Verwendung des Federelementes 1.4 ist optional und kann dann in Erwägung gezogen werden, wenn aufgrund von Raumproblemen der Schieber 1 nicht solide genug ausgeführt werden kann, um eine entsprechende Federkraft, basierend auf seinem Formgedächtnis, aufzubauen.

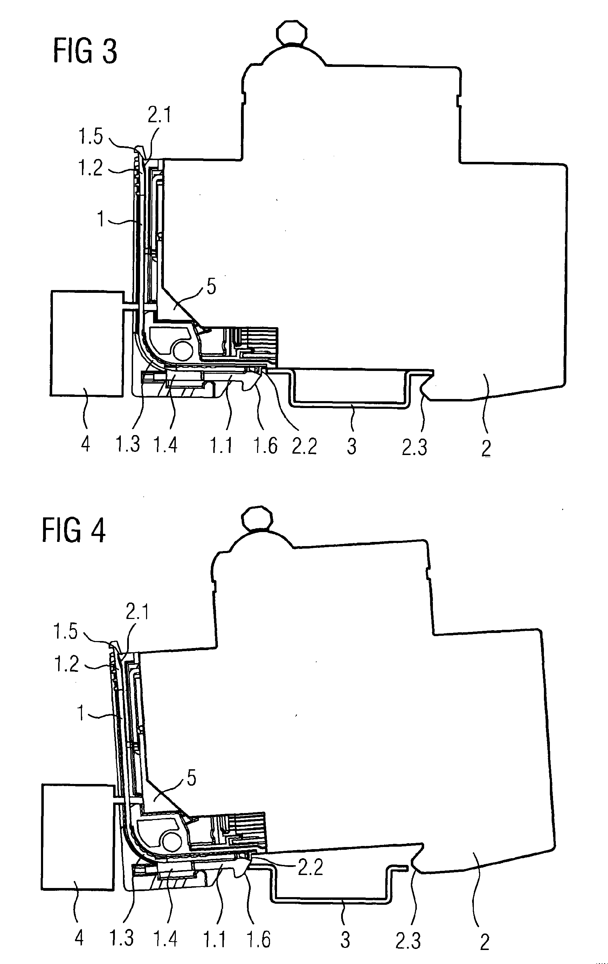

FIG 3 zeigt das Reiheneinbaugerät 2 aus FIG 1 in teilweise geschnittener Ansicht im entriegelten Zustand.

Der Benutzer hat das Betätigungselement 1.2 betätigt und die Raststelle 1.5 mit der dazugehörigen Gehäusekontur 2.1 verrastet. Das Reiheneinbaugerät 2 befindet sich in der Entriegelungsstellung, wobei der Teil der Hutschiene 3, der an dem Gehäuseabsatz 2.2 angeordnet ist, frei an dem Gehäuse des Reiheneinbaugerätes 2 anliegt. Das unterstützende Federelement 1.4 ist in diesem Zustand stärker beansprucht als in der Verriegelungsstellung.

Vorteilhafterweise weist der Schieber 1, zumindest auf der Winkel bildenden Seite des Schiebers 1, eine geriffelte Struktur auf, die es dem Schieber 1 erleichtert, eine optimale Elastizität, auch im gebogenen Zustand, hervorzubringen und Reibungskräfte zu reduzieren.

Vorteilhafterweise weist die hier nicht zu sehende Öffnung des Schiebers 1 für die Kontaktierung der Klemme 5 mit der Sammelschiene 4 eine Form auf, die auch die Bewegung des Schiebers 1 unterstützt.

FIG 4 zeigt das Reiheneinbaugerät 2 aus FIG 1 bei der Demontage bzw. Montage. Befindet sich das Reiheneinbaugerät 2 bereits im gelösten Zustand, wie es in FIG 3 gezeigt ist, so kann die Ausformung 2.3 des Gehäuses um das Ende der Hutschiene 3 herumgeführt werden, wobei anschließend das Reiheneinbaugerät 2 von der Sammelschiene 3 weg (in der Regel nach vorne) geführt werden kann. Dies wird unterstützt von der teilweise pfeilartigen Ausformung 1.6 des Verriegelungselementes 1.1.

Bei der Montage bzw. Demontage verbleibt die Raststelle 1.5 in die dazugehörige Gehäusekontur 2.1 eingehakt.

Bei der Montage werden die gleichen Installationsschritte wie bei der Demontage - allerdings in der umgekehrten Reihenfolge - durchgeführt. Der Schieber 1 befindet sich hierbei in der Entriegelungsstellung, wobei gleichzeitig das Reiheneinbaugerät 2 bzw. die Klemme 5 an die Kontakte der Sammelschiene 4 angelagert werden. Alternativ wird das Verriegelungselement 1.1 durch eine Kippbewegung des Reiheneinbaugerätes 2 entgegen der Verriegelungsrichtung bewegt und mit ihm der gesamte Schieber 1. Im Anschluss wird der Gehäuseabsatz 2.2 zum Anliegen an die Hutschiene 3 gebracht, wobei gleichzeitig die Anformung 2.3 hinter der Hutschiene 3 platziert wird. Zuletzt wird die Raststelle 1.5 aus der dazugehörigen Gehäusekontur 2.1 ausgehakt, womit das Reiheneinbaugerät vollständig befestigt ist.

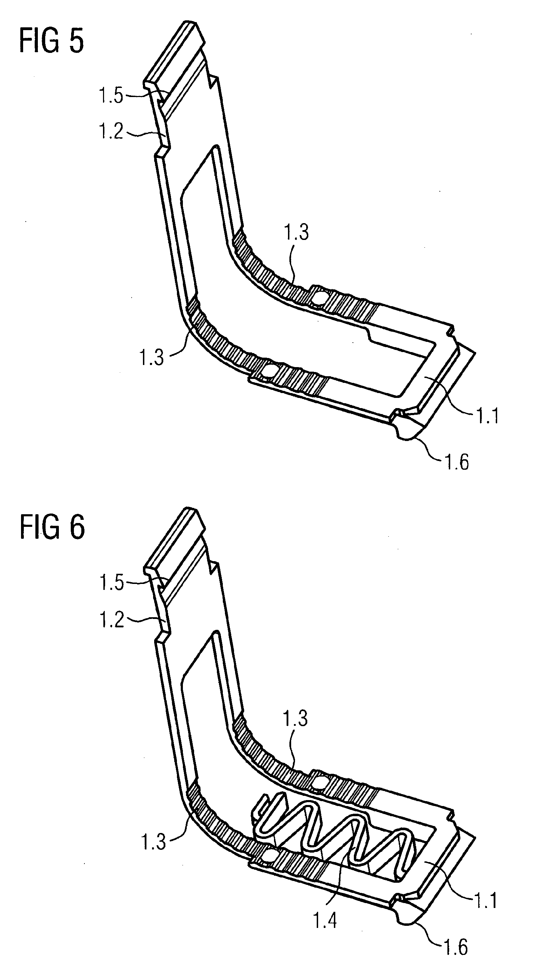

FIG 5 zeigt einen Schieber 1 für ein Reiheneinbaugerät mit einem Betätigungselement 1.2 und eine Raststelle 1.5, die eine widerhakenähnliche Form aufweist.

Der Verbindungsbereich 1.3 ist in zwei streifenartige Verbindungselemente aufgeteilt, die beide für sich das Betätigungselement 1.2 mit dem Verriegelungselement 1.1 verbinden. Damit bildet der Verbindungsbereich 1.3 in Kombination mit dem Betätigungselement 1.2 und dem Verriegelungselement 1.1 eine großflächige Öffnung, die für die Durchführung von Leitern bzw. elektrischen Kontakten optimal geeignet ist. Zudem ist die groß angelegte Öffnung dem Materialaufwand einträglich, wobei ebenso auf die Rigidität des Schiebers 1 Rücksicht genommen werden kann, zumal diese die elastische Federkraft bzw. Rückstellkraft des Schiebers 1 definiert.

Der Verbindungsbereich 1.3 kann flexibel gestaltet werden. Hierbei muss die Kraftumlenkung nicht notwendigerweise um einen rechten Winkel geändert werden, sondern kann auch andere Winkelstellungen einnehmen. Des Weiteren sind auch mehrere Öffnungen bzw. streifenähnliche Ausformungen des Verbindungsbereiches 1.3 möglich, womit beispielsweise die Stabilität des Schiebers 1 bzw. dessen rückstellende Kraft erhöht werden kann.

FIG 6 zeigt einen Schieber 1 für ein Reiheneinbaugerät mit zusätzlichem Federelement 1.4. Das Federelement 1.4 ist einstückig an das Verriegelungselement 1.1 angeformt und bildet eine federähnliche Struktur aus. Hierbei kann das Federelement 1.4 vorgespannt sein, so dass die Kraftwirkung für eine Verriegelung bzw. Fixierung des Reiheneinbaugerätes 2 sicher von statten geht. Allerdings bedeutet die Anbringung des Federelementes 1.4 zusätzlichen Aufwand und erhöht die Kosten für die Schieberherstellung.

Zusammenfassend betrifft die Erfindung eine Schnappbefestigung zur Befestigung eines Gehäuses, insbesondere eines Reiheneinbaugerätes, an einer Schiene mit einem Schieber, wobei der Schieber ein Betätigungselement, ein Verriegelungselement und einen Verbindungsbereich zwischen den beiden Elementen aufweist. Es soll eine Lehre angegeben werden, die es ermöglicht, eine Schnappbefestigung anzugeben, die auch aus einem bei angeschlossenen Leitern bzw. Sammelschienen angereihten Verband bequem lösbar und kostengünstig herstellbar ist. Hierfür wird der Schieber einstückig und zumindest dessen Verbindungsbereich elastisch zurückstellend ausgeführt. Damit erübrigen sich zusätzliche Federkraft aufbauende Elemente, da die zurückstellende Federkraft des Schiebers, die denselben stets in die Verriegelungsposition zurückdrängt, aus dem Formgedächtnis des Schiebers heraus generiert wird.

## Patentansprüche

1. Schnappbefestigung zur Befestigung eines Gehäuses an einer Schiene (3) mit einem Schieber (1), wobei der Schieber (1) ein Betätigungselement (1.2), ein Verriegelungselement (1.1) und einen Verbindungsbereich (1.3) zwischen dem Betätigungselement (1.2) und dem Verriegelungselement (1.1) zur Umlenkung der Richtung der Betätigungskraft aufweist, die über den Verbindungsbereich (1.3) auf das Verriegelungselement (1.1) wirkt,
dadurch **ge-kennzeichnet,**
dass der Schieber (1) einstückig und zumindest dessen Verbindungsbereich (1.3) elastisch zurückstellend ausgeführt ist, und
dass der Verbindungsbereich (1.3), in einer Entriegelungsstellung des Schiebers (1) zum Aufbau einer in die Verriegelungsstellung rückstellenden Kraft vorgesehen ist.

2. Schnappbefestigung nach Anspruch 1, wobei der Schieber (1) oder zumindest dessen Verbindungsbereich (1.3) aus einem nicht-metallischen Material, insbesondere Kunststoff, besteht.

3. Schnappbefestigung nach einem der vorhergehenden Ansprüche, wobei die Schnappbefestigung eine Führung des Schiebers (1) aufweist, die an die Form des Schiebers (1) angepasst ist.

4. Schnappbefestigung nach einem der vorhergehenden Ansprüche, wobei die Führung des Schiebers (1) zumindest teilweise in das Gehäuse integriert ist.

5. Schnappbefestigung nach einem der vorhergehenden Ansprüche, wobei die rückstellende Kraft durch ein Formgedächtnis des Schiebermaterials in Wechselwirkung mit der Führung des Schiebers (1) aufbaubar ist.

6. Schnappbefestigung nach einem der vorhergehenden Ansprüche, wobei der Schieber (1), insbesondere in dessen Verbindungsbereich (1.3), eine Öffnung zur Durchführung kontaktierender Elemente aufweist.

7. Schnappbefestigung nach einem der vorhergehenden Ansprüche, wobei der Schieber (1) wenigstens ein Federelement (1.4) zum Aufbau einer zusätzlichen, rückstellenden Kraft aufweist.

8. Modul mit einer Schnappbefestigung nach den Ansprüchen 1 bis 8 und mit einem Gehäuse zur Befestigung an eine Schiene (3), insbesondere eine Sammel- oder Hutschiene.

9. Modul nach Anspruch 8, wobei das Modul als Schalter und/oder Reiheneinbaugerät ausgeführt ist.

## Claims

1. Snap fastener for fastening a housing onto a rail (3) with a slider (1), with the slider (1) having an actuation element (1.2), a locking element (1.1) and a connection region (1.3) between the actuation element (1.2) and the locking element (1.1) for deflecting the direction of the actuation force, which acts on the locking element (1.1) across the connection region (1.3),
**characterised in that**
the slider (1) is embodied as one piece and at least the connection region (1.3) thereof is elastically returning and the connection region (1.3) thereof, is provided in an unlocking position of the slider (1) to establish a force returning to the locking position.

2. Snap fastener according to claim 1, with the slider (1) or at least the connection region (1.3) thereof being made of a non-metallic material, in particular plastic.

3. Snap fastener according to one of the preceding claims, with the snap fastener having a guide of the slider (1), which is adjusted to the shape of the slider (1).

4. Snap fastener according to one of the preceding claims, with the guide of the slider (1) being integrated at least partially into the housing.

5. Snap fastener according to one of the preceding claims, with it being possible to establish the returning force by means of a shape memory of the slider material when interacting with the guide of the slider (1).

6. Snap fastener according to one of the preceding claims, with the slider (1), in particular the connection region (1.3) thereof, having an opening for feeding through contacting elements.

7. Snap fastener according to one of the preceding claims, with the slider (1) having at least one spring element (1.4) for establishing an additional returning force.

8. Module with a snap fastener according to claims 1 to 8 and with a housing for fastening to a rail (3), in particular a bus bar or top hat rail.

9. Module according to claim 8, with the module being embodied as a switch and/or serially integrated device.

## Revendications

1. Fixation par encliquetage permettant de fixer un boîtier sur une barre (3) avec une patte (1), la patte (1) présentant un élément d'actionnement (1.2), un élément de verrouillage (1.1) et un secteur de liaison (1.3) entre l'élément d'actionnement (1.2) et l'élément de verrouillage (1.1) pour rediriger la direction de la force d'actionnement qui s'exerce par l'intermédiaire du secteur de liaison (1.3) sur l'élément de verrouillage (1.1),
**caractérisé en ce que**
la patte (1) est réalisée d'un seul tenant et de manière à ce qu'au moins le secteur de liaison (1.3) de celle-ci présente un rappel élastique, et
le secteur de liaison (1.3), dans une position de déverrouillage de la patte (1), est fourni en vue d'une constitution d'une force de rappel dans la position de verrouillage.

2. Fixation par encliquetage selon la revendication 1, dans laquelle la patte (1) ou au moins le secteur de liaison (1.3) de celle-ci est constitué d'un matériau non métallique, en particulier du plastique.

3. Fixation par encliquetage selon l'une quelconque des revendications précédentes, dans laquelle la fixation par encliquetage présente un guidage de la patte (1) qui est adapté à la forme de la patte (1).

4. Fixation par encliquetage selon l'une quelconque des revendications précédentes, dans laquelle le guidage de la patte (1) est intégré au moins partiellement dans le boîtier.

5. Fixation par encliquetage selon l'une quelconque des revendications précédentes, dans laquelle la force de rappel peut être constituée grâce à une mémoire de forme du matériau de patte en interaction avec le guidage de la patte (1).

6. Fixation par encliquetage selon l'une quelconque des revendications précédentes, dans laquelle la patte (1), en particulier dans le secteur de liaison (1.3) de celle-ci, présente une ouverture destinée à la mise en oeuvre d'éléments de mise en contact.

7. Fixation par encliquetage selon l'une quelconque des revendications précédentes, dans laquelle la patte (1) présente au moins un élément formant ressort (1.4) destiné à une constitution d'une force de rappel supplémentaire.

8. Module avec une fixation par encliquetage selon l'une quelconque des revendications 1 à 8 et avec un boîtier destiné à une fixation sur une barre (3), en particulier une barre collectrice ou une barre profilée.

9. Module selon la revendication 8, dans lequel le module est réalisé en tant que commutateur et/ou appareil modulaire.
